# EUROPEAN PATENT SPECIFICATION

(11) **EP 2 946 599 B1**
(45) Date of publication and mention of the grant of the patent: **30.05.2018**
(21) Application number: 14704934.0
(22) Date of filing: 20.01.2014
(51) Int. Cl.: H04W 36/00, H04W 8/24, H04W 48/14, H04W 84/12

(54) **ENHANCED INTEGRATION BETWEEN WI-FI AND MOBILE COMMUNICATION NETWORKS**
ERHÖHTE INTEGRATION ZWISCHEN WIFI- UND MOBILKOMMUNIKATIONSNETZEN
INTÉGRATION AMÉLIORÉE ENTRE DES RÉSEAUX WI-FI ET DE COMMUNICATION MOBILE

(30) Priority: 18.01.2013 US 201361754138 P
(43) Date of publication of application: 25.11.2015
(73) Proprietor: Telefonaktiebolaget LM Ericsson (publ), 164 83 Stockholm (SE)
(72) Inventor: TEYEB, Oumer, SE-177 44 Solna (SE); MILDH, Gunnar, SE-192 55 Sollentuna (SE); VIKBERG, Jari, SE-153 38 Järna (SE)
(74) Representative: Zacco Sweden AB
(86) International application number: PCT/SE2014/050056
(87) International publication number: WO 2014/112941

(56) References cited:
- EP-A1- 2 528 391
- WO-A1-2008/000914
- WO-A1-2013/006254
- US-A1- 2007 032 219
- US-A1- 2008 146 232
- Lan/man Standards Committee Of The Ieee Computer Society: "IEEE 802.11u-2011 Part 11: Wireless LAN Medium Access Control (MAC) and Physical Layer (PHY) Specifications - Amendment 9: Interworking with External Networks", , 25 February 2011 (2011-02-25), pages 1-208, XP055032050, Retrieved from the Internet: URL:http://standards.ieee.org/getieee802/d ownload/802.11u-2011.pdf [retrieved on 2012-07-06]

## Description

### TECHNICAL FIELD

Embodiments herein relate to a wireless terminal being configured to communicate both with a mobile communication network and a Wi-Fi access point and a method therein.

### BACKGROUND

With the proliferation of devices that have support for both Wi-Fi and mobile communication networks (such as 3GPP (Third Generation Partnership Project) mobile broadband), offloading traffic to the Wi-Fi network is becoming very interesting, both from user's and operator's perspective. The main difference between access selection and traffic steering in the Wi-Fi case as compared to steering between mobile communication networks is that it is the terminal that decides when it shall select a Wi-Fi Access Point (AP) while in the latter case it is the network that is in charge of the network access decisions. Due to technical and historical reasons, the Wi-Fi deployment scenario is in many cases fundamentally different than the cellular deployment. For this reason, special considerations have to be made when integrating Wi-Fi to mobile communication networks.

It would be beneficial to improve the basis upon which a decision whether a wireless terminal should be transferred to a Wi-Fi AP or not.

WO 2013/006254 A1 is an example of prior art and discloses a wireless communication system comprising a wireless communication device arranged to detect multiple wireless access networks available for connection to the wireless communication device for providing data services. The device is arranged to discover one or more access capabilities of at least one of the detected wireless access networks, and compares the discovered access capabilities with a mobility policy so as to select an available wireless access networks for connection. Access capabilities may include aspects such as IP protocols and ports allowed by an access network, and capacity constraints such as available uplink and downlink transmission rates.

US 2008/146232 A1 is an example of prior art and discloses techniques for neighbour list provision in a communication network. From an access terminal, a query for potential access points within communication range of the access terminal is received; and neighbour list information is provided to the access terminal. The neighbour list information is associated with available access points capable of providing the access terminal with access to a network.

### SUMMARY

It is an object to improve the basis upon which a decision is made whether a wireless terminal is to associate to a Wi-Fi AP or not.

According to a first aspect, it is presented a method, performed in a wireless terminal according to claim 1.

By using the ANQP message to transmit the information (comprising the link parameter and/or terminal parameter), the AP can e.g. be provided with this information prior to the wireless device attempting to associate with the Wi-Fi network. The AP can then, based on the information, decide to accept or reject a subsequent association request. Particularly in the case when the AP determines to reject based on the information, this spares the association and disassociation of the wireless terminal, saving resources.

The at least one link parameter may comprise at least one of a strength parameter of the current link, a Reference Signal Received Power parameter, a quality parameter of the current link, a Reference Signal Received Quality parameter, an uplink data rate, a downlink data rate, a jitter parameter, and a service setup time parameter.

In the transmitting an ANQP message, the ANQP message may be an association request.

The method may further comprise, after the transmitting an ANQP message, transmitting an association request to the Wi-Fi access point.
According to a second aspect, it is presented a wireless terminal according to claim 5. According to a third aspect, it is presented a computer program comprising computer program code according to claim 6. According to a fourth aspect, it is presented a computer program product according to claim 7. According to a fifth aspect, it is presented a method, performed in a Wi-Fi network node according to claim 8. The method may further comprise: estimating whether the Wi-Fi network is able to provide better quality than the mobile communication network based on the information in the ANQP message. In such a case, the determining comprises determining whether to transfer data traffic based on the result of the estimating.
The receiving may be performed before the wireless terminal is associated with the Wi-Fi network, and the determining may comprise determining whether to accept or reject an association request from the wireless terminal based on the information of the ANQP message.
The receiving an ANQP message may be repeated for a plurality of wireless terminals and the determining may comprise performing load balancing to decide which wireless terminals should be kept associated with the Wi-Fi network node and which wireless terminals should not be kept associated with the Wi-Fi network node.
The method may further comprise: broadcasting a query for the information to a plurality of wireless terminals.

According to a sixth aspect, it is presented a Wi-Fi network node according to claim 12. According to a seventh aspect, it is presented a computer program according to claim 13. According to an eighth aspect, it is presented a computer program product according to claim 14. Wi-Fi is to be understood to be a wireless network that is based on any one or more of the IEEE 802.11 standards.
It is to be noted that whenever used in the claims and description herein, the phrase to "connect to an access point" is equivalent to "associate with an access point".
Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating an overall architecture for a system where embodiments presented herein can be applied;
Fig 2 is a schematic diagram illustrating a functional split between E-UTRAN and EPC;
Fig 3A is a schematic diagram illustrating an embodiment of the user plane of a Wi-Fi system;
Fig 3B is a schematic diagram illustrating an embodiment of the control plane of a Wi-Fi system;
Fig 4 is a schematic diagram illustrating an ANDSF (Access Network Discovery and Selection Function) architecture which may be applied to combine a mobile communication network of Figs 1/2 and the Wi-Fi system of Figs 3A/3B;
Fig 5 is a schematic diagram illustrating a data element used to indicate basic service set metrics in the Wi-Fi systems of Figs 3A-3B, Fig 4;
Fig 6 is a schematic diagram illustrating a data element used to indicate WAN metrics in the Wi-Fi systems of Figs 3A-3B and Fig 4;
Fig 7 is a sequence diagram illustrating an example of ANQP communication;
Fig 8 is a schematic diagram illustrating an integration of the ANDSF architecture of Fig 4 and a Hotspot 2.0 (HS2.0) architecture;
Fig 9 is a schematic diagram illustrating a system in which embodiments presented herein can be applied;
Fig 10 is a schematic diagram showing some components of the wireless terminal;
Fig 11 is a schematic diagram showing some components of the Wi-Fi network node;
Figs 12A-B are flow charts illustrating embodiments of methods performed in the wireless terminal of Fig 10;
Figs 13A-B are flow charts illustrating embodiments of methods performed in the Wi-Fi network node of Fig 11;
Fig 14 is a schematic diagram showing functional modules of the wireless terminal of Fig 10;
Fig 15 is a schematic diagram showing functional modules of the Wi-Fi network node of Fig 10; and
Fig 16 is a schematic diagram showing one example of a computer program product 90 comprising computer readable means;

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

Embodiments presented herein describe several aspects of integrating Wi-Fi and mobile communication networks, in order to steer of traffic while considering both the end user's as well as the network's performance.

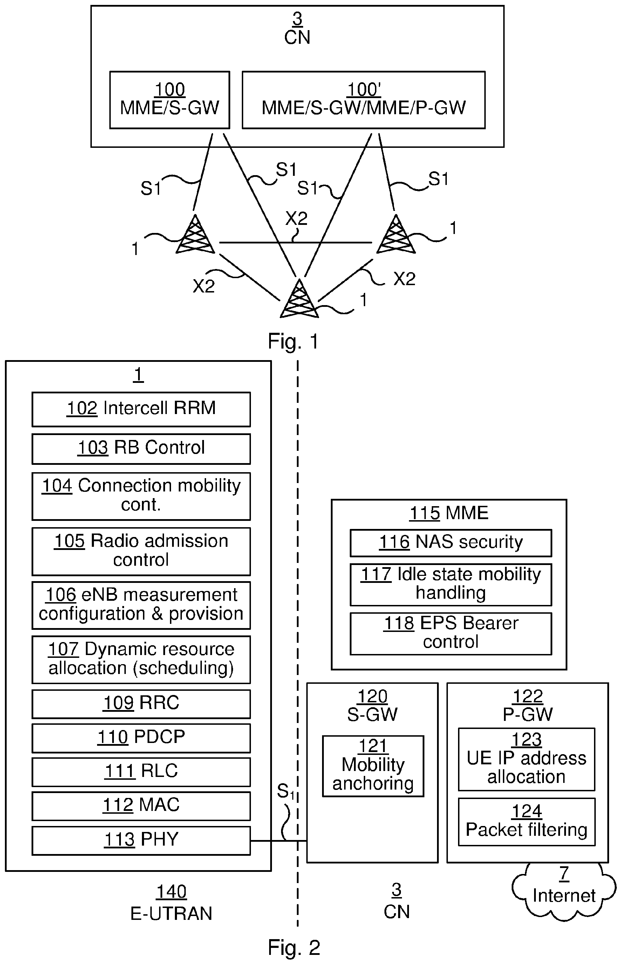

Fig 1 is a schematic diagram illustrating an overall architecture for a system where embodiments presented herein can be applied.

### Overall E-UTRAN architecture

The Evolved UMTS (Universal Mobile Telecommunications System) Terrestrial Radio Access Network (E-UTRAN) comprises base stations called enhanced NodeBs (eNBs or eNodeBs) 1, providing the E-UTRA (Evolved UMTS Terrestrial Radio Access) user plane and control plane protocol terminations towards the wireless terminal (also known in many network standards as User Equipment (UE)). The eNBs 1 are interconnected with each other by means of the X2 interface. The eNBs 1 are also connected by means of the S1 interface to the core network (CN) 3, EPC (Evolved Packet Core), more specifically to the MME (Mobility Management Entity) by means of the S1-MME interface and to the Serving Gateway (S-GW) by means of the S1-U interface. The MME and the S-GW are here exemplified as forming part of the same respective node 100, 100', but this is not necessarily the case. The S1 interface supports many-to-many relation between MMEs / S-GWs 100 and eNBs 1. The E-UTRAN architecture is illustrated in Fig 1.

The eNB 1 hosts functionalities such as Radio Resource Management (RRM), radio bearer control, admission control, header compression of user plane data towards the wireless terminal, routing of user plane data towards the serving gateway. The MME is the control node that processes the signaling between the wireless terminal and the CN 3. The main functions of the MME are related to connection management and bearer management, which are handled via Non Access Stratum (NAS) protocols. The S-GW is the anchor point for wireless terminal mobility, and also includes other functionalities such as temporary DL data buffering while the wireless terminal is being paged, packet routing and forwarding to the right eNB. The PDN (Packet Data Network) Gateway (P-GW) (forming part of the second node 100' of Fig 1) is the node responsible for wireless terminal IP (Internet Protocol) address allocation, as well as Quality of Service (QoS) enforcement (this is explained further below).

Fig 2 is a schematic diagram illustrating a functional split between E-UTRAN and EPC (i.e. CN 3 of Fig 1). Fig 2 gives a summary of the functionalities of the different nodes, and the reader is referred to 3GPP TS 36.300 and the references therein for the details of the functionalities of the different nodes.

The eNB 1 on the E-UTRAN side 140 comprises the following functional entities for intercell RRM 102, RB (Radio Bearer) control 103, connection mobility control 104, radio admission control 105, eNB measurement configuration and provision 106 and dynamic resource allocation (scheduling) 107. Moreover, the eNB comprises the following radio protocol layers: RRC (Radio Resource Control) 109, PDCP (Packet Data Convergence Protocol) 110, RLC (Radio Link Control) 111, MAC (Media Access Control) 112 and PHY (Physical Layer) 113.

The MME 115 contains the following functional entities: NAS security 116, Idle state mobility handling 117 and EPS (Evolved Packet System) bearer control 118. The S-GW 120 contains a functional entity for mobility anchoring 121. The P-GW 122 contains functional entities for UE IP (Internet Protocol) address allocation 123 and packet filtering 124. The P-GW 122 is also connected to the Internet 7 for IP communication.

The MME 115, the S-GW 120 and the P-GW 122 form part of the CN3.

### Traffic offloading using Wi-Fi

Using Wi-Fi/WLAN (Wireless Local Area Network) (the two terms are equivalent and are used interchangeably throughout this document) to offload traffic from the mobile networks is becoming more and more interesting from both the operator's and end users point of view. Some of the reasons for this tendency are:
**Additional frequency:** by using Wi-Fi, operators and/or the subscribers can get an additional 85MHz in the 2.4GHz band and another (close to) 500MHz in the 5GHz band.
**Cost:** From operator's point of view, Wi-Fi uses unlicensed frequency that is free of charge. On top of that, the cost of Wi-Fi APs (Access Points), both from CAPEX (Capital Expenditure) and OPEX (Operational Expenditure) (deployment) aspects, is considerably lower than that of a base station (BS/eNB) of a mobile communication network. Operators can also take advantage of already deployed APs that are deployed in hotspots such as train stations, airports, stadiums, shopping malls, etc. Most end users are also currently used to having Wi-Fi for no additional charge at home (as home broadband subscriptions are typically flat rate) and public places.
**Terminal support:** Almost all wireless terminals such as smartphones and other portable devices currently available in the market support Wi-Fi. In the Wi-Fi world, the term Station (STA) is often used instead of wireless terminal. It is to be understood that the term wireless terminal is used herein and corresponds to STA, in the context of Wi-Fi.
**High data rate:** Under low interference conditions and assuming the user is close to the Wi-Fi AP, Wi-Fi can provide peak data rates that outshine that of current mobile networks (for example, theoretically up to 600Mbps for IEEE 802.11n deployments with MIMO (Multiple Input Multiple Output)).

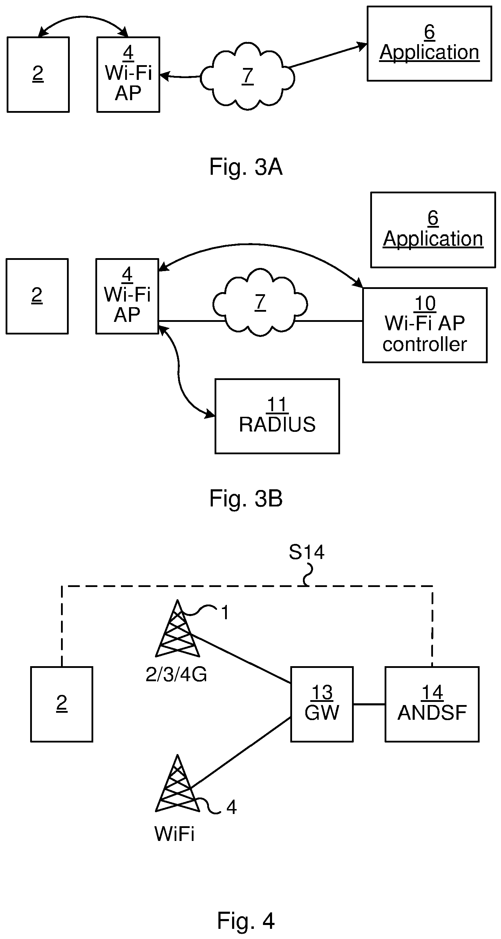

Fig 3A is a schematic diagram illustrating an embodiment of the user plane of a Wi-Fi system and Fig 3B is a schematic diagram illustrating an embodiment of the control plane of a Wi-Fi system. On the user plane as seen in Fig 3A, a lean architecture is employed where one or more wireless terminals 2 are associated/connected to the Wi-Fi AP 4, which can be directly connected to the Internet 7 to access an application 6. In the control plane seen in Fig 3B, a Wi-Fi Access Point Controller (AC) 10 handles the management of the AP 4. One AC 10 usually handles the management of several APs 4. Security/authentication of users is handled via an Authentication, Authorisation and Accounting (AAA) entity 11. Remote Administration Dial In User Service (RADIUS) is the most widely used network protocol for providing a centralised AAA management, but other protocols are equally possible.

Fig 4 is a schematic diagram illustrating an ANDSF (Access Network Discovery and Selection Function) architecture which may be applied to combine a mobile communication network of Figs 1/2 and the Wi-Fi system of Figs 3A/3B.

A Gateway (GW) 13 provides parts of the communication link used e.g. for the S14 interface. This could be for example a combination of S-GW 120 and P-GW 122 of Fig 2.

### Access Network Discovery and Selection Function

The Access Network Discovery and Selection Function (ANDFS) 14 is an entity defined by 3GPP for providing access discovery information as well as mobility and routing policies to the wireless terminal 2. ANDFS is a new entity added to the 3GPP architecture in Release 8 of 3GPP TS 23.402. A simplified ANDSF architecture is depicted in Fig 4. As shown in the figure, the ANDSF server 14 is only connected to the wireless terminal 2 and its main goal is to provide the wireless terminal 2 with access network information in a resource efficient and secure manner. The communication between the wireless terminal 2 and the ANDSF server 14 is defined as an IP-based S14-interface.

By supplying information about available both 3GPP (mobile communication) and non-3GPP (such as Wi-Fi) access networks to the wireless terminal 2, the ANDSF 14 enables an energy-efficient mechanism of network discovery, where the wireless terminal 2 can avoid continuous and energy-consuming background scanning. Furthermore, the ANDSF 14 provides the mobile operators with a tool for the implementation of flexible and efficient wireless terminal 2 steering of access mechanisms, where policy control can guide wireless terminals 2 to select one particular RAN (Radio Access Network) over another. Note that this may be an overstatement if ANDSF 14 is implemented as an "app", since it relies on OS support and priority of ANDSF 14 in relation to other "apps". This condition may be only partly fulfilled, which makes the control somewhat unreliable.

The ANDSF supplies three types of information - discovery information, inter-system mobility policies (ISMP) and inter-system routing policies (ISRP). All these are summarised and implemented via ANDSF managed objects (MO), which are communicated to the wireless terminals 2 via an over-the-top (OTT) signaling channel, as SOAP (Simple Object Access Protocol) XML (Extensible Markup Language) messages.

The discovery information provides the wireless terminal with information regarding the availability of different RATs (Radio Access Techonologies) in the wireless terminal's vicinity, e.g. LTE (Long Term Evolution), W-CDMA (Wideband Code Division Multiplex), EDGE (Enhanced Data Rates for GSM (Global System for Mobile communication) Evolution), Wi-Fi, etc. This helps the wireless terminal to discover available (3GPP and) non-3GPP access networks without the burden of continuous background scanning. *Inter-System Mobility Policies (ISMP)* are policies which guide the wireless terminal to select the most preferable 3GPP or non-3GPP access. The ISMP is used for wireless terminals that access a single access (3GPP or Wi-Fi) at a time (some wireless terminals are able to simultaneously access 3GPP and Wi-Fi). The ISMP information specifies the behaviour of wireless terminals, which can be connected to only one access network at a given time (either 3GPP, Wi-Fi, WiMAX (Worldwide Interoperability for Microwave Access), etc). If the wireless terminal, however, supports connection to several access networks at the same time, the operator can use the third type of information, ISRP, to increase the granularity of the RAN selection. In that case, the wireless terminals will be provided with policies, which specify how the traffic flows should be distributed over the different RAN (for example, voice is only allowed to be carried over 3GPP RAN, while Internet video streaming and best-effort traffic can be routed via WLAN). The ANDSF provides mobile operators with a tool to determine how the wireless terminals connect to different RANs and hence allows them to add more flexibility in their traffic planning.

### Hotspot 2.0

Different standards organisations have started to recognise the needs for an enhanced user experience for Wi-Fi access, this process being driven by 3GPP operators. An example of this is the Wi-Fi Alliance with the Hotspot 2.0 (HS2.0) initiative, now officially called PassPoint ("Hotspot 2.0 (Release 1) Technical Specification", Wi-Fi Alliance® Technical Committee Hotspot 2.0 Technical Task Group, V1.0.0). HS2.0 is primarily geared toward Wi-Fi networks. HS2.0 builds on a standard called IEEE 802.11u, and adds requirements on authentication mechanisms and auto-provisioning support.

The momentum of Hotspot 2.0 is due to its roaming support, its mandatory security requirements and for the level of control it provides over the terminal for network discovery and selection. Even if the current release of HS2.0 is not geared toward mobile communication network interworking, mobile communication operators are trying to introduce additional traffic steering capabilities, leveraging HS2.0 802.11u mechanisms. Because of the high interest of mobile communication operators, there will be a second release of HS2.0 focusing on mobile communication network interworking requirements.

HS2.0 contains the following procedures:
Discovery: where the terminal discovers the Wi-Fi network, and probes them for HS2.0 support, using 802.11u and HS 2.0 extensions;
Registration is performed by the terminal toward the Wi-Fi Hotspot network if there is no valid subscription for that network;
Provisioning: Policy related to the created account is pushed toward the terminal. This only takes place when a registration take place;
Access: cover the requirements and procedures to associate with a HS2.0 Wi-Fi network.

One of the attractive aspects of HS2.0 is that it provides information for the wireless terminal that it can use to evaluate the load of the Wi-Fi network before attempting the authentication process, thereby avoid unnecessary connection to highly loaded Wi-Fi network. The load conditions that the wireless terminal can evaluate are: BSS (Basic Service Set) load element and WAN (Wide Area Network) metrics element.

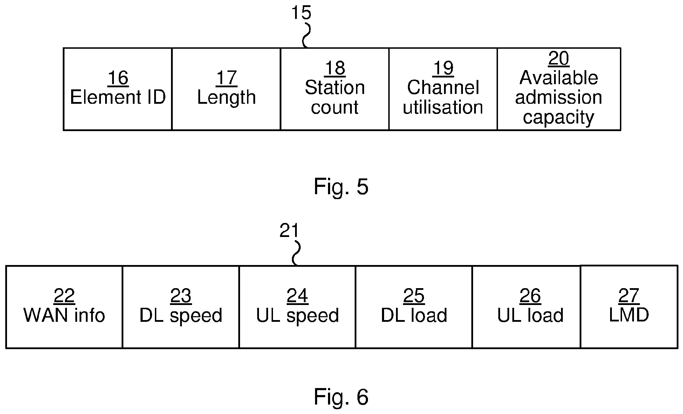

Fig 5 is a schematic diagram illustrating a data element used to indicate basic service set metrics 15 in the Wi-Fi systems of Figs 3A-3B and Fig 4. The BSS load element 15 is a part of the original IEEE 802.11 standard and provides information about the AP population and the current over-the-air traffic levels. It is obtained either via a Beacon or a Probe Response frame and is used for vendor-specific AP-selection algorithms. The element is described in detail in Chapter 8.4.2.30 of IEEE 802.11.

The BSS load element 15 comprises an element ID 16, a length field 17 a station count field 18, a channel utilisation field 19 and an available admission capacity field 20. The station count field 18 is an unsigned integer indicating the total number of wireless terminals currently associated with the AP.

The "Channel Utilisation" field 19 indicates the proportion of time that the AP senses the medium as busy. The available admission capacity field 20 is a two octet long field containing an unsigned integer specifying the remaining amount of medium time available via explicit admission control, in units of 32 µs/s.

The station count field 18 is an activity parameter indicating the number of wireless terminals which are associated with to the access point in question.

Fig 6 is a schematic diagram illustrating a data element used to indicate WAN metrics 21 in the Wi-Fi systems of Figs 3A-3B, Fig 4. The WAN metrics element 21 is one of the extra features that Hotspot™ 2.0 adds to the IEEE 802.11u amendment. The WAN metrics element 21 can be obtained via an ANQP query (by requesting the element "ANQP Vendor Specific list") and it provides the following information about the AP point in question: WAN info 22, downlink speed 23, uplink speed 24, downlink load 25, uplink load 26 and LMD (Load Measurement Duration) 27. LMD 27 represents the duration over which the downlink load and uplink load have been measured, in tenths of a second. The WAN metrics element 21 is described in detail in Chapter 4.4 of the HS2.0 specification.

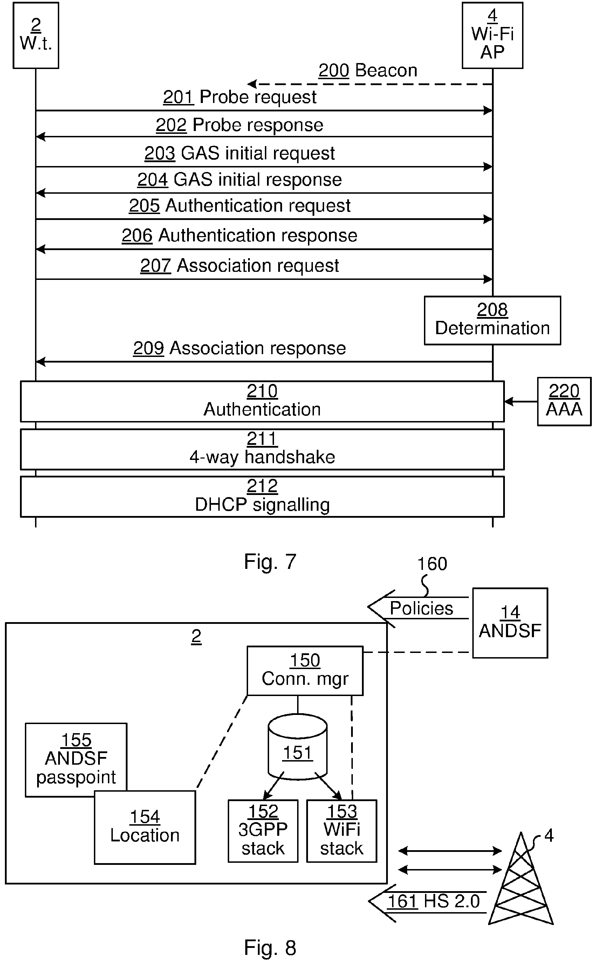

As described above, HS2.0 uses Access Network Query Protocol (ANQP) as part of the network discovery and selection function. It provides a mechanism for the wireless terminal to request different information from AP before association. Figure 7 shows the main principle for ANQP. ANQP is carried in the Generic Advertisement Services (GAS) protocol. Fig 7 is in the form of a sequence diagram illustrating an example of ANQP communication, e.g. between the wireless terminal 2 and the Wi-Fi AP 4 of Figs 3A-B.

First, the Wi-Fi AP 4 may broadcast a beacon 200 to announce the presence of the Wi-Fi network and e.g. capability information, supported data rates, etc.

If the wireless terminal does not receive the beacon 200 for some reason, the wireless terminal 2 transmits a probe request 201 to the Wi-Fi AP 4 to gain information from the Wi-Fi AP 4, to which the Wi-Fi AP 4 responds with a probe response 202 comprising, e.g. capability information, supported data rates, etc. The discovery procedure consists of either receiving a beacon 200 or exchanging the probe messages 201, 202, i.e. these two steps are mutually exclusive.

The wireless terminal 2 then sends a GAS initial request 203 to the Wi-Fi AP 4, which responds with a GAS initial response 204 comprising configuration and reachability information. The GAS frames can encapsulate the ANQP messages and are sent using specific 802.11 public action management frames.

At this point, the wireless terminal 2 is ready to send an authentication request 205 to the Wi-Fi AP 4. The Wi-Fi AP 4 responds with an authentication response 206. The purpose of this relates to open system authentication, to open up the communication between the wireless terminal and the Wi-Fi AP only (i.e. not towards other destinations behind the Wi-Fi AP).

If the authentication response 206 indicates successful authentication, the wireless terminal 2 is then ready to send an association request 207 in order to associate with the Wi-Fi AP 4. The Wi-Fi AP 4 then determines 208 whether to allow the association request and sends an association response 209 to the wireless terminal 2.

The actual authentication 210 can then occur between the wireless terminal 2 and the Wi-Fi AP 4, in communication with an AAA entity 220. The authentication can be performed using for example EAP-SIM or EAP-AKA (see below).

When the authentication is successful, a 4-way handshake 211 is performed to protect the information sent between the wireless terminal 2 and the Wi-Fi AP 4. After the 4-way handshake 211, the wireless terminal is given an IP address using DHCP signalling 212.

A number of different Wi-Fi/Mobile Communication Network Integration mechanisms or scenarios will now be described.

First, the scenario of no integration will be described. Most current Wi-Fi deployments are totally separate from mobile networks, and are to be seen as non-integrated. From the terminal perspective, most mobile operating systems for wireless terminals such as Android and iOS, support a simple Wi-Fi offloading mechanism where the wireless terminals immediately switch all their PS (Packet Switched) bearers to a Wi-Fi network upon a detection of such a network with a certain signal level. The decision to offload to a Wi-Fi or not is referred henceforth as *access selection strategy* and the aforementioned strategy of selecting Wi-Fi whenever such a network is detected is known as *"Wi-Fi-if-coverage".*

There are several drawbacks of the Wi-Fi-if-coverage strategy:
Though the user/ wireless terminal can save previous passcodes for already accessed Wi-Fi Access Points (APs), hotspot login for previously unaccessed APs usually requires user intervention, either by entering the passcode in Wi-Fi connection manager or using a web interface.

Interruptions of ongoing services can occur due to the change of IP address when the wireless terminal switches to the Wi-Fi network. For example, a user who started a VoIP call while connected to a mobile network is likely to experience call drop when arriving home and the wireless terminal automatically switches to the Wi-Fi network. Although some applications are smart enough to handle this and survive the IP address change (e.g. Spotify), the majority of current applications don't. It also places a lot of burden on application developers if they have to ensure service continuity.

No consideration of expected radio performance is made, and this can lead to a wireless terminal being handed over from a high data rate mobile network link to a low data rate via the Wi-Fi link. Even though the wireless terminal's operating system or some high level software is smart enough to make the offload decisions only when the signal level on the Wi-Fi is considerably better than the mobile network link, there can still be limitations on the backhaul that the Wi-Fi AP is using that may end up being the bottleneck, e.g. if the Wi-Fi AP has an xDSL (x digital subscriber line) backhaul connection while a network node on the mobile network side has an optical fibre backhaul connection.

No consideration of the load conditions in the mobile network and Wi-Fi are made. As such, the wireless terminal might still be offloaded to a Wi-Fi AP that is serving several wireless terminals while the mobile network (e.g. LTE) that it was previously connected to is rather unloaded.

No consideration of the wireless terminal's mobility is made. Due to this, a fast moving wireless terminal can end up being offloaded to a Wi-Fi AP for a short duration, just to be handed over back to the mobile network. This is specially a problem in scenarios like cafes with open Wi-Fi, where a user walking by or even driving by the cafe might be affected by this. Such ping pong between the Wi-Fi and mobile network can cause service interruptions as well as generate considerable unnecessary signaling (e.g. towards authentication servers).

In order to combat these problems, several integration mechanisms for Wi-Fi/mobile communication networks are been proposed.

Now, a scenario of common authentication will be described. The idea behind common authentication is based on automatic SIM (Subscriber Identity Module) based authentication in both access types. Extensible Authentication Protocol (EAP) is an authentication framework that provides support for the different authentication methods. Described by RFC (Request For Comments) 3748 and later updated by RFC 5247, this protocol is carried directly over data link layer (DLL) and is currently widely deployed in WLANs. The EAP framework specifies over 40 different methods for authentication, and EAP-SIM (Subscriber Identity Module) is the one that is becoming widely available in wireless terminals and networks. The main benefit of common authentication is that the user doesn't necessarily have to be actively involved in the authentication process which will increase the chances of more traffic to be steered to the Wi-Fi side, and paves the way for network centric control.

Here now follows a description of User plane (Core network) integration. Wi-Fi user plane integration provides the mobile operator the opportunity to provide the same services, like parental control and subscription based payment methods, for the end users when connected both via a mobile communication network and via Wi-Fi. The solutions also include the possibility to offload parts of the user plane from the mobile core so that not all traffic needs to be brought to the mobile core network.

Different solutions are being standardised in 3GPP. Overlay solutions (S2b, S2c) are specified since 3GPP Rel-8 while integration solutions (S2a) are currently work-in-progress (S2a, S2b, S2c indicate the 3GPP interface/reference point name towards the PDN-GW).

Now, a scenario of RAN level integration will be described. A further level of integration can be realised via radio access selection based on RAN information on both mobile communication networks and Wi-Fi, in addition to the common authentication and user plane integration methods discussed above.

A function known as a Smart RAN Controller (SRC) is introduced that can be used as an information sharing point for the Wi-Fi and mobile communication networks. The "SRC" function can be implemented as a separate node or it can implemented as part of any of the existing mobile communication network or Wi-Fi nodes. It can also be implemented either as a centralised function in one node or as a function distributed to multiple nodes. Optimal traffic steering can then be performing by considering the situation at each network. Using such an abstraction, even legacy wireless terminals could be able to benefit from Wi-Fi integration. For example, consider a legacy wireless terminal that is already connected to a mobile communication network, and employing "Wi-Fi if coverage" access selection mechanism as described above comes to a Wi-Fi coverage area. When the wireless terminal tries to associate with the Wi-Fi network, the Wi-Fi AP/AC can connect to the SRC to request information about the current user's Quality of Service (QoS) in the mobile communication network, and if it is found that the user's QoS is going to be degraded if the connection is switched to Wi-Fi, a rejection could be sent to the wireless terminal from the Wi-Fi in order keep it connected to the mobile communication network. A tighter integration can also be formed if the Wi-Fi AP and eNB are co-located and have direct communication between them rather communicating via the SRC (similarly one can think of direct communication between the AC, RNC, BSS, etc...).

There are a number of problems with ANDSF and Hotspot 2.0. ANDSF policies are either static or semi-static, and they are not adaptive to fast changing radio environments and system loads. Even though it is possible to enhance the ANDSF to include radio link quality into the policies, the current mechanism limits update frequency of the policies. Therefore it is not capable of guiding the terminal to an access which provides better QoE.

In terms of mobile communication network interworking, HS2.0's role is mainly to improve usability and facilitate access selection by providing both the Wi-Fi over-the-air and backhaul loads. It is not expected that HS2.0 will support operator controlled dynamic access selection.

The ANDSF and Hotspot2.0 mechanisms described above are not targeting tight integration of Wi-Fi considering network information (e.g. load in different accesses, bitrates, etc.). The reason for this is that the exact wireless terminal behaviour is not specified and the parameters do not include radio information. There is, however, work starting in 3GPP SA2 and Wi-Fi Alliance Hotspot2.0 Release 2 to enhance ANDSF to take into account the Hotspot 2.0 solutions. One example is that the ANDSF policy could define wireless terminal actions based on the information received from the Wi-Fi AP about the BSS load and WAN metric (using a "BSS load element" and "WAN metrics element" respectively).

Fig 8 is a schematic diagram illustrating an integration of the ANDSF architecture of Fig 4 and a Hotspot 2.0 architecture. The wireless terminal 2 comprises a connection manager 150 which controls which interface(s) (the 3GPP protocol stack 152 and/or the Wi-Fi protocol stack 153) should be active, directly or via data in a memory 151. A location source 154 (e.g. GPS, Global Positioning System) is also connected to the connection manager 150. The wireless terminal 2 also comprises an ANDSF client 155 module corresponding to the ANDSF server 14. The ANDSF server 14 sends policies 160 using ANDSF signalling over IP to the wireless terminal 2. The wireless terminal 2 is connected to e.g. with an access point 4 that uses protocols defined in HS 2.0 161.

Wireless terminal based solutions such as the currently available ones in Android and iOS based phones have several drawbacks as described in above. Network based solutions such as ANDSF, as mentioned above, use rather static rules and they don't reflect current network conditions. RAN level integration via SRC is able to consider both wireless terminal and network performance in a dynamic fashion. However, the SRC based solution can become complex to implement as there is a need to maintain the context of each wireless terminal in the different access network. Also, each offloading decision requires the involvement of the SRC entity and a wireless terminal in IDLE mode in the mobile communication network and not connected to Wi-Fi will not be able to utilise the benefits of SRC based solutions.

In embodiments presented herein, enhancements on the Wi-Fi side are presented that can be used for optimised Wi-Fi/mobile communication network integration that try to mitigate some of the short comings of the methods discussed above.

Note that the case of mobile communication network and WLAN is used as exemplary scenario in embodiments presented herein, but the main ideas can be applicable to the integration of WLAN with other kind of networks as well.

The embodiments presented herein facilitate tighter integration between mobile communication networks and WLAN by defining new enhancements on the Wi-Fi side. The wireless terminals are enabled to send additional information towards the WLAN side, such as wireless terminal capability and current mobile communication network quality status. Based on this information, the WLAN side can either make optimal offloading decision or communicate back to the wireless terminal with a wireless terminal specific information and then the wireless terminal can use this information to switch to WLAN or not. As an option the wireless terminal may also report the received information to the mobile communication network side for a decision to be taken there.

One idea of embodiments presented herein is to provide the WLAN side with additional information regarding the mobile communication network side and/or wireless terminal capability in order to make optimal offloading decisions. This offloading decision can occur in a Wi-Fi network node being either an access point (AP) or an access point controller (AC).

In one embodiment, when a wireless terminal comes into the coverage area of a WLAN and detects an access point (i.e. it detected a WLAN with a RSSI (Receive Strength Signal Indicator) greater than a certain threshold) it will send information to the access point about its current link with a mobile communication network. This information about the mobile communication network can include:
- The mobile communication network link strength and quality (e.g. RSRP (Reference Signal Received Power)., RSRQ (Reference Signal Received Quality))
- The UL/DL data rate
- Jitter
- Service setup time
- Other parameters

With regard to the link strength and quality, the information can be just the instantaneous RSRP/RSRQ values of the current serving cell or it can have detailed measurement report about the current and serving cells similar to the one performed for intra-mobile communication network handover. One possibility is the detection of a WLAN with an RSSI higher than a certain threshold will trigger a measurement report of the mobile communication network side, which is then sent to the WLAN side.

The other information components like UL/DL data rate, jitter and service setup times are usually informative only when filtered or averaged over a certain duration. Additionally, the traffic pattern affects the experienced throughput (e.g. different data rates will be experienced when the wireless terminal has a bursty web browsing traffic instead of a download of a huge file). Due to this, the information about the traffic type as well as the duration of the averaging/filtering (if any has been performed) can be included along with the concerned information.

Apart from the information about the mobile communication network, wireless terminal specific information can also be included. Wireless terminal specific information can be:
- Active services/bearers, and their QoS requirements such as data rate, latency, packet drop rate, etc.
- Movement status (e.g. average speed during the last x seconds)
- Wireless terminal capability information (e.g. MIMO support, IEEE 802.11 version supported, etc.)

Some of the wireless terminal specific information, such as wireless terminal capability can be implicitly determined from the Type Allocation Code (TAC), which is the initial eight digit portion of the 15 digit International Mobile station Equipment Identity (IMEI) code or the 16 digit International Mobile station Equipment Identity and Software Version Number (IMEISV). The TAC identifies a particular model (and often revision) of a wireless terminal and the WLAN side can have (or has access to) a mapping of the TAC to the device capability regarding other RATs.

To communicate the information to the WLAN side, a new ANQP message(s) can be defined. As discussed above, this will enable the wireless terminal to send the information before associating with the WLAN access point. Another possibility will be to include this message in the association request message or any other 802.11 message sent from the wireless device to the Wi-Fi AP/AC. Whether to send this information pre-association or during association can be made dependent on the experienced signal level on the WLAN side. For example, if the RSSI of the WLAN is below a certain threshold (x), we can use the pre-association messaging, while if it is greater than x, the wireless terminal can try to associate to the WLAN side and send the information about the mobile communication network side along with the association request.

Apart from just considering the RSSI value thresholds for triggering a measurement report, a comparison can also be performed between the RSRP/RSRQ on the mobile communication network side and the RSSI on the WLAN side. Direct comparison between the two may not make sense, as they are calculated in different ways. However, each can be compared to different thresholds. For example, a triggering condition can be that the RSSI on the WLAN side is greater than a certain threshold and the RSRP on the mobile communication network side is less than another threshold value. The values to be used on the mobile communication network side can be just the value of the serving cell or it can be the value from another cell if it is better than the current serving cell.

Upon getting the information about the mobile communication network, the WLAN can estimate if it can provide the wireless terminal with a better quality than the mobile communication network side. In order to do this estimation, the WLAN side can use the information about the RSSI experienced by the wireless terminal, map it to a data rate that can be experienced for a certain RSSI and load. This mapping can be done based on historical or measurement data. For example, the WLAN can gather information of experienced data rates, RSSI values and WLAN AP load to generate the mapping table. The mapping table can be sent to the WLAN AP or the AP can request it (for an update) from the OSS (Operations Support System) on a need basis. The estimated data rate that can be provided on the WLAN side is then compared with that needed by the wireless terminal (i.e. based on the information included about the active services/bearers) as well as the currently available one on the mobile communication network side.

If the wireless terminal has sent the request before associating with the WLAN, the WLAN side can simply respond with information that contains the expected performance of the wireless terminal on the WLAN side. This can be detailed information regarding the data rate, bit rate, jitter to be expected, or a simple Yes/No/Similar that tells the wireless terminal connecting to the WLAN side will be better, worse or not significantly different from the current mobile communication network connection. Then it is up to the wireless terminal or the mobile communication network side to make the decision to associate and switch to the WLAN side or not.

If the wireless terminal has sent the request along with an association request, the WLAN can reject the request if the estimated performance in the WLAN side is expected to be worse than the mobile communication network side. Or it can accept the association regardless of the estimated performance on the WLAN side, but it communicates the information about the estimated performance towards the wireless terminal along with a positive association response. Then it will be up to the wireless terminal or the mobile communication network side to keep the association /switch to the WLAN side or not.

The wireless terminal can also send the request after it has been associated with a WLAN AP. One use case scenario is for load balancing. Consider a case where a wireless terminal has both mobile communication network and WLAN links active and some services are running over the mobile communication network link while the rest are using WLAN. The WLAN, when it gets information about the mobile communication network side, it can decide whether to keep the wireless terminal associated with it, or offload it completely back to the mobile communication network side (i.e. disassociate it). One example could be that the WLAN can see that the data rate the wireless terminal is getting from the mobile communication network side is much better than the one that it is getting from the WLAN side.

It could also be envisioned that the WLAN AP can gather information from all the wireless terminals associated with it, and then decide which ones to keep associated with it or not. That is, the users that are having a very good data rate with the mobile communication network side can be disassociated, while keeping the ones that have the lowest mobile communication network data rate, as these users are more likely to benefit from keeping the WLAN link, and also their WLAN data rate is expected to increase when the WLAN AP stops serving the high mobile communication network data rate wireless terminals.

In order to gather the information about the mobile communication network side, the WLAN can query the information from a wireless terminal associated with a certain AP. The WLAN can send such a request message, by extending the WLAN management signaling, that specifically asks for this information. Instead of sending this request to each wireless terminal, the WLAN AP can instead broadcast a query request, and wireless terminals associated with the WLAN and also have mobile communication network link active will take this as a cue or an order to send the information regarding their mobile communication network connection towards the AP. The broadcasted query request can be a single Boolean flag added to the information that is already broadcasted by APs (which includes info such as SSID (Service set identification)), and the AP can set this flag to one for a certain duration to gather the information about the mobile communication network side.

When the WLAN has decided to disassociate a wireless terminal, legacy WLAN disassociating/de-authenticating management signaling can be used. However, a wireless terminal might consider this as an anomaly and try to re-authenticate/re-associate again. In order to avoid this, the disassociation/de-authentication message can be extended to include a cause value (e.g. load balancing), which explicitly informs the wireless terminal why that decision was made.

The wireless terminal can communicate the received estimated WLAN performance status (for example, via enhanced RRC (Radio Resource Control) measurement reports) towards the currently serving mobile communication network. Upon receiving such information, the mobile communication can make the offloading decision, and communicate that for the wireless terminal. This can be done, for example, via enhancements of the legacy RRC handover signaling. If the wireless terminal supports dual connectivity to WLAN and a mobile communication network, then the decision taken by the network could be to offload only some of the bearers towards the WLAN side. Such selective handover can be beneficial in the cases where the WLAN is not able to provide as much performance as the mobile communication network (i.e. not able to support all the active bearers of the wireless terminal) as well as cases where network wants to keep some services running over the mobile communication network side whenever possible (e.g. voice services or services with strict QoS requirements).

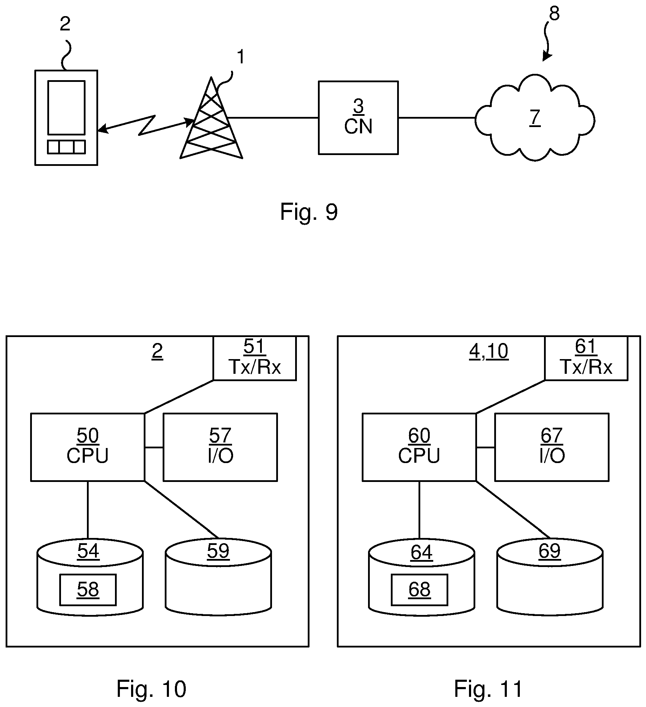

Fig 9 is a schematic diagram illustrating a mobile communication network 8 where embodiments presented herein may be applied. The mobile communication network 8 comprises a core network 3 and one or more radio base stations 1, here in the form of evolved Node Bs, also known as eNode Bs or eNBs. The radio base stations 1 could also be in the form of Node Bs, and/or BTSs (Base Transceiver Stations), etc. The radio base stations 1 provide radio connectivity to a plurality of wireless terminals 2. The term wireless terminal is also known as mobile communication terminal, user equipment (UE), station (STA), mobile terminal, user terminal, user agent, machine-to-machine devices etc., and can be, for example, what today are commonly known as a mobile phone or a tablet/laptop with wireless connectivity or fixed mounted terminal. Moreover, the wireless terminals 2 may but do not need to, be associated with a particular end user.

The mobile communication network 8 may e.g. comply with any one or a combination of LTE-SAE (Long Term Evolution - System Architecture Evolution), W-CDMA (Wideband Code Division Multiplex), EDGE (Enhanced Data Rates for GSM (Global System for Mobile communication) Evolution), GPRS (General Packet Radio Service), CDMA2000 (Code Division Multiple Access 2000), or any other current or future wireless network, such as LTE-Advanced, as long as the principles described hereinafter are applicable. In one embodiment, the mobile communication network is called a 3GPP network,

Uplink communication (from the wireless terminal) and downlink communication (to the wireless terminal) between each wireless terminal 2 and the radio base station 1 occur over a wireless radio interface 4. The quality of the wireless radio interface 4 to each wireless terminal 2 can vary over time and depending on the position of the wireless terminal 2, due to effects such as fading, multipath propagation, etc.

The radio base stations 1 are also connected to the core network 3 for connectivity to central functions and a wide area network 7, such as the Internet.

Fig 10 is a schematic diagram showing some components of an embodiment of the wireless terminal 2 of Figs 3A-B and Figs 4, 7, 8 and 9. A processor 50 is provided using any combination of one or more of a suitable central processing unit (CPU), multiprocessor, microcontroller, digital signal processor (DSP), application specific integrated circuit etc., capable of executing software instructions contained in a computer program 58 stored in a computer program product 54, e.g. in the form of a memory, but not in the form of a signal or any form of electromagnetic wave. The processor 50 can be configured to execute the methods for a wireless terminal described herein.

The computer program product 54 is here a memory being any combination of read and write memory (RAM) and read only memory (ROM). The memory also comprises persistent storage, which, for example, can be any single one or combination of magnetic memory, optical memory, solid state memory or even remotely mounted memory. The processor 50 controls the general operation of the wireless terminal 2.

The wireless terminal 2 further comprises a data memory 59, which is a read-and-write memory. The data memory 59 may also comprises persistent storage, which, for example, can be any single one or combination of magnetic memory, optical memory, solid state memory or even remotely mounted memory. Optionally, the computer program product 54 and the data memory 59 can form part of the same memory device.

The wireless terminal 2 further comprises an I/O interface 57 for communicating with external entities. The I/O interface 57 includes a user interface for receiving input from the user and providing feedback to the user, e.g. using a touch sensitive display, keypad, microphone, speaker, etc.

The wireless terminal 2 also comprises one or more transceivers 51 (or one or more separate transmitters and receivers), comprising analogue and digital components, and a suitable number of antennas for radio communication with radio base stations and/or access points.

Fig 11 is a schematic diagram showing some components of a Wi-Fi network node, such as the access point AP 4 of Figs 3A-B or Figs 7-8, or an access point controller (AC) 10 of Figs 3A-B. A processor 60 is provided using any combination of one or more of a suitable central processing unit (CPU), multiprocessor, microcontroller, digital signal processor (DSP), application specific integrated circuit etc., capable of executing software instructions contained in a computer program 68 stored in a computer program product 64, e.g. in the form of a memory, but not in the form of a signal or any form of electromagnetic wave. The processor 60 can be configured to execute the methods for a Wi-Fi network node described herein.

The computer program product 64 is here a memory being any combination of read and write memory (RAM) and read only memory (ROM). The memory also comprises persistent storage, which, for example, can be any single one or combination of magnetic memory, optical memory, solid state memory or even remotely mounted memory. The processor 60 controls the general operation of the wireless terminal 2.

The Wi-Fi network node further comprises a data memory 69, which is a read-and-write memory. The data memory 69 may also comprises persistent storage, which, for example, can be any single one or combination of magnetic memory, optical memory, solid state memory or even remotely mounted memory. Optionally, the computer program product 64 and the data memory 69 can form part of the same memory device.

The Wi-Fi network node further comprises an I/O interface 67 for communicating with external entities, e.g. a user interface for interacting with a user, or a wired connection for system monitoring/debugging.

Particularly when the Wi-Fi network node is a Wi-Fi AP, it also comprises one or more transceivers 61 (or one or more separate transmitters and receivers), comprising analogue and digital components, and a suitable number of antennas for radio communication with wireless terminals 2.

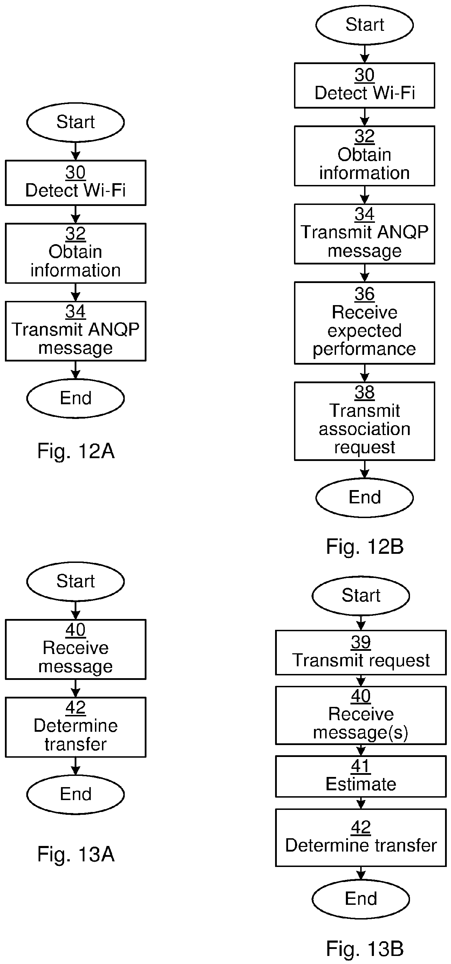

Figs 12A-B are flow charts illustrating methods performed in the wireless terminal of 10. The wireless terminal is capable of communicating both with a mobile communication network and a Wi-Fi access point. First, the method of Fig 12A will be described.

In a *detect Wi-Fi* step 30, a presence of a Wi-Fi access point is detected as described above, e.g. by detecting a Wi-Fi network with an RSSI which is greater than a certain threshold.

In an *obtain information* step 32, information is obtained comprising at least one link parameter and/or at least one terminal parameter.

The link parameter is related to a current link between the wireless terminal and a mobile communication network, i.e. about the mobile communication network from the perspective of the wireless terminal e.g. as described above. For instance, the at least one link parameter can comprise at least one of: a strength parameter of the current link, a Reference Signal Received Power parameter, a quality parameter of the current link, a Reference Signal Received Quality parameter, an uplink data rate, a downlink data rate, a jitter parameter, and a service setup time parameter.

The terminal parameter is related to the wireless terminal itself, i.e. terminal specific information as described above. The terminal parameter can e.g. comprise at least one of: a number of active services, a number of active bearers, the data rate, latency and packet drop rate of active services, the data rate, latency and packet drop rate of active bearers, a movement indicator, and a capability indicator related to Wi-Fi.

In a *transmit ANQP message* step 34, ANQP message comprising the information is transmitted to the Wi-Fi access point. The ANQP message can be transmitted prior, in association with or after associating with the Wi-Fi AP.

As described above, the ANQP message can be a new message defined for the purpose of providing the link parameter and/or terminal parameter to the AP.

By using the ANQP message to transmit the information (comprising the link parameter and/or terminal parameter), the AP can be provided with this information prior to the wireless device attempting to associate with the Wi-Fi network. As described above, the AP can then, based on the information, decide to accept or reject a subsequent association request. Particularly in the case when the AP determines to reject based on the information, this spares the association and disassociation of the wireless terminal, saving resources.

In Fig 12B embodiments similar to the method shown in Fig 12A are shown. The steps of the method of Fig 12A will not be described here again unless they are modified in some way.

In a *receive expected performance* step 36, an expected performance of the wireless terminal on the Wi-Fi side is received from the Wi-Fi AP.

In a *transmit association request* step 38, an association request is transmitted to the Wi-Fi AP.

Figs 13A-B are flow charts illustrating methods performed in the Wi-Fi network node of Fig 11. First, the method of Fig 13A will be described.

In a *receive message* step 40, an ANQP message is received from the wireless terminal. The ANQP message comprises information comprising at least one link parameter and/or at least one terminal parameter related to the wireless terminal, as explained above.

The *receive message* step 40 can be performed before the wireless terminal is associated with the Wi-Fi network, in which case the *determine transfer* step 42 comprises determining whether to accept or reject an association request from the wireless terminal based on the information of the ANQP message.

In one embodiment, the receive message step 40 is performed in conjunction with the association request and in one embodiment, the receive message step 40 is performed after the association request.

Optionally, the *receive message* step 40 is repeated for a plurality of wireless terminals. In such a case, the *determine transfer* step 42 comprises performing load balancing to decide which wireless terminals should be kept associated with the Wi-Fi network node and which wireless terminals should not be kept associated with the Wi-Fi network node, as described above.

In a *determine transfer* step 42, the Wi-Fi network node determines whether to transfer data traffic from the mobile communication network to the Wi-Fi network based on the information of the ANQP message. The data traffic can relate to traffic to and/or from the wireless terminal.

In Fig 13B embodiments similar to the method shown in Fig 13A are shown. The steps of the method of Fig 13A will not be described here again unless they are modified in some way.

In a *transmit request* step 39, the Wi-Fi network node transmits a query for the information (link and/or terminal information) to a plurality of wireless terminals. The query can be broadcast to all wireless terminals in the vicinity of the Wi-Fi network node or the query can be one or more dedicated queries to respective wireless terminals. The request can be transmitted in a broadcast query or a unicast query to one or more specific wireless terminals.

In an *estimate* step 41, it is estimated whether the Wi-Fi network is able to provide better quality than the mobile communication network based on the information in the ANQP message, e.g. as described above. In such a case, the *determine transfer* step 42 comprises determining whether to transfer data traffic based on the result of the estimating.

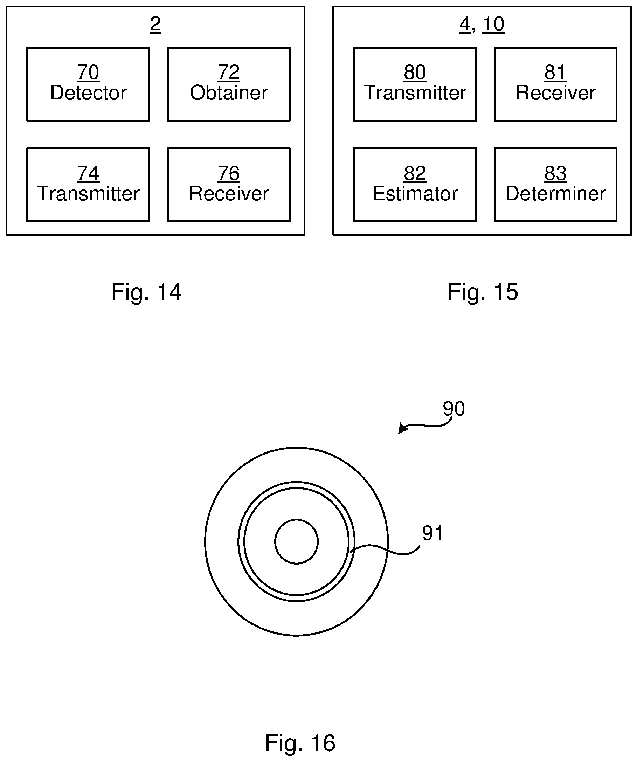

Fig 14 is a schematic diagram showing functional modules of the wireless terminal 2 of Fig 10. The modules can be implemented using software instructions such as a computer program executing in the wireless terminal 2 and/or using hardware, such as application specific integrated circuits, field programmable gate arrays, discrete logical components, transceivers, etc. The modules correspond to the steps in the methods illustrated in Figs 12A-B.

A detector 70 is arranged to detect the presence of the Wi-Fi AP. This module corresponds to the *detect Wi-Fi step* 30 of Figs 12A-B.

An obtainer 72 is arranged to obtain the information comprising at least one link parameter and/or at least one terminal parameter. This module corresponds to the *obtain information* step 32 of Figs 12A-B.

A transmitter 74 is arranged to transmit the ANQP message comprising the information to the Wi-Fi AP. This module corresponds to the *transmitANQP message* step 34 of Figs 12A-B and the *transmit association request* step 38 of Fig 12B.

A receiver 76 is arranged to receive the expected performance over the Wi-Fi network of the AP. This module corresponds to the *receive expected performance* step 36 of Fig 12B.

Fig 15 is a schematic diagram showing functional modules of the Wi-Fi network node 4, 10 of Fig 11. The modules can be implemented using software instructions such as a computer program executing in the Wi-Fi network node and/or using hardware, such as application specific integrated circuits, field programmable gate arrays, discrete logical components, transceivers, etc. The modules correspond to the steps in the methods illustrated in Figs 13A-B.

A transmitter 80 is arranged to transmit a query for the information to a plurality of wireless terminals. This module corresponds to the *transmit request* step 39 of Fig 13B.

A receiver 81 is arranged to receive an ANQP message comprising information comprising at least one link parameter and/or at least one terminal parameter. This module corresponds to the *receive message* step 40 of Figs 13A-B.

An estimator 82 is arranged to estimate whether the Wi-Fi network is able to provide better quality than the mobile communication network based on the information in the ANQP message. This module corresponds to the *estimate* step 41 of Fig 13B.

A determiner 83 is arranged to determine whether to transfer data traffic of the wireless terminal, from the mobile communication network to the Wi-Fi network based on the information of the ANQP message. This module corresponds to the *determine transfer* step 42 of Figs 13A-B.

Fig 16 is a schematic diagram showing one example of a computer program product 90 comprising computer readable means. On this computer readable means a computer program 91 can be stored, which computer program can cause a processor to execute one or more methods according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 54 of Fig 10 or the computer program product 64 of Fig 11 or as a removable solid state memory such as a USB (Universal Serial Bus) memory. While the computer program 91 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the invention.

## Claims

1. A method, performed in a wireless terminal (2) being configured to communicate both with a mobile communication network and a Wi-Fi access point (4), the method comprising:
detecting (30) a presence of a Wi-Fi access point (4);
obtaining (32) information comprising at least one link parameter related to a current link between the wireless terminal (2) and a mobile communication network (8); and
transmitting (34) an Access Network Query Protocol, ANQP, message comprising the information to the Wi-Fi access point (4).

2. The method according to claim 1, wherein the at least one link parameter comprises at least one of a strength parameter of the current link, a Reference Signal Received Power parameter, a quality parameter of the current link, a Reference Signal Received Quality parameter, an uplink data rate, a downlink data rate, a jitter parameter, and a service setup time parameter.

3. The method according to any one of the preceding claims, wherein in the transmitting (34) an ANQP message, the ANQP message is an association request.

4. The method according to any one of the preceding claims, further comprising, after the transmitting (34) an ANQP message, transmitting (38) an association request to the Wi-Fi access point (4).

5. A wireless terminal (2) being configured to communicate both with a mobile communication network and a Wi-Fi access point (4), the wireless terminal (2) comprising:
a processor (50); and
a computer program product (54) storing instructions that, when executed by the processor, cause the wireless terminal (2) to:
detect a presence of a Wi-Fi access point (4);
obtain information comprising at least one link parameter related to a current link between the wireless terminal (2) and a mobile communication network (8); and
transmit an Access Network Query Protocol, ANQP, message comprising the information to the Wi-Fi access point (4).

6. A computer program (91) comprising computer program code which, when run on a wireless terminal (2) being configured to communicate both with a mobile communication network and a Wi-Fi access point (4), causes the wireless terminal (2) to:
detect a presence of a Wi-Fi access point (4);
obtain information comprising at least one link parameter related to a current link between the wireless terminal (2) and a mobile communication network; and
transmit an Access Network Query Protocol, ANQP, message comprising the information to the Wi-Fi access point (4).

7. A computer program product (90) comprising a computer program (91) according to claim 6 and a computer readable means on which the computer program is stored.

8. A method, performed in a Wi-Fi network node (4, 10) of a Wi-Fi network, the method comprising:
receiving (40) an Access Network Query Protocol, ANQP, message comprising information comprising at least one link parameter from a wireless terminal (2), the at least one link parameter being related to a current link between the wireless terminal (2) and a mobile communication network (8); and
determining (42) whether to transfer data traffic, to and/or from the wireless terminal (2), from the mobile communication network to the Wi-Fi network based on the information of the ANQP message.

9. The method according to claim 8, further comprising:
estimating (41) whether the Wi-Fi network is able to provide better quality than the mobile communication network based on the information in the ANQP message, and
wherein the determining (42) comprises determining whether to transfer data traffic based on the result of the estimating.

10. The method according to claim 8 or 9, wherein the receiving (40) is performed before the wireless terminal (2) is associated with the Wi-Fi network, and wherein the determining (42) comprises determining whether to accept or reject an association request from the wireless terminal (2) based on the information of the ANQP message.

11. The method according to any one of claims 8 to 10, wherein the receiving (40) an ANQP message is repeated for a plurality of wireless terminals and wherein the determining (42) comprises performing load balancing to decide which wireless terminals should be kept associated with the Wi-Fi network node (4, 10) and which wireless terminals should not be kept associated with the Wi-Fi network node (4, 10).

12. A Wi-Fi network node (4, 10) of a Wi-Fi network, the Wi-Fi network node (4, 10) comprising:
a processor (60); and
a computer program product (64) storing instructions that, when executed by the processor (60), cause the Wi-Fi network node (4, 10) to:
receive an Access Network Query Protocol, ANQP, message comprising information comprising at least one link parameter from a wireless terminal (2), the at least one link parameter being related to a current link between the wireless terminal (2) and a mobile communication network; and
determine whether to transfer data traffic, to and/or from the wireless terminal (2), from the mobile communication network to the Wi-Fi network based on the information of the ANQP message.

13. A computer program (91) comprising computer program code which, when run on Wi-Fi network node (4, 10), causes the Wi-Fi network node (4, 10) to:
receive an Access Network Query Protocol, ANQP, message comprising information comprising at least one link parameter from a wireless terminal (2), the at least one link parameter being related to a current link between the wireless terminal (2) and a mobile communication network; and
determine whether to transfer data traffic, to and/or from the wireless terminal (2), from the mobile communication network to the Wi-Fi network based on the information of the ANQP message.

14. A computer program product comprising a computer program according to claim 13 and a computer readable means on which the computer program is stored.

## Patentansprüche

1. Verfahren, durchgeführt in einem drahtlosen Endgerät (2), das zum Kommunizieren sowohl mit einem mobilen Kommunikationsnetz als auch einem Wi-Fi-Zugangspunkt (4) konfiguriert ist, wobei das Verfahren Folgendes umfasst:
Erkennen (30) einer Anwesenheit eines Wi-Fi-Zugangspunkts (4) ;
Erlangen (32) von Informationen, die zumindest einen Verbindungsparameter bezüglich einer aktuellen Verbindung zwischen dem drahtlosen Endgerät (2) und einem mobilen Kommunikationsnetz (8) umfassen; und
Übertragen (34) einer Zugangsnetzabfrageprotokoll (ANQP)-Nachricht, die die Informationen umfasst, an den Wi-Fi-Zugangspunkt (4).

2. Verfahren nach Anspruch 1, wobei der zumindest eine Verbindungsparameter zumindest eine(n) von einem Stärkenparameter der aktuellen Verbindung, einem Referenzsignalempfangsleistungs-Parameter, einem Qualitätsparameter der aktuellen Verbindung, einem Referenzsignalempfangsqualitäts-Parameter, einer Uplink-Datenrate, einer Downlink-Datenrate, einem Jitter-Parameter und einem Diensteinrichtungszeit-Parameter umfasst.

3. Verfahren nach einem der vorstehenden Ansprüche, wobei beim Übertragen (34) einer ANQP-Nachricht die ANQP-Nachricht eine Verbindungsaufforderung ist.

4. Verfahren nach einem der vorstehenden Ansprüche, ferner umfassend, nach dem Übertragen (34) einer ANQP-Nachricht, Übertragen (38) einer Verbindungsaufforderung an den Wi-Fi-Zugangspunkt (4).

5. Drahtloses Endgerät (2), das zum Kommunizieren sowohl mit einem mobilen Kommunikationsnetz als auch einem Wi-Fi-Zugangspunkt (4) konfiguriert ist, wobei das drahtlose Endgerät (2) Folgendes umfasst:
einen Prozessor (50); und
ein Computerprogrammprodukt (54), das Anweisungen speichert, die, wenn sie von dem Prozessor ausgeführt werden, das drahtlose Endgerät (2) dazu veranlassen:
eine Anwesenheit eines Wi-Fi-Zugangspunkts (4) zu erkennen; Informationen, die zumindest einen Verbindungsparameter bezüglich einer aktuellen Verbindung zwischen dem drahtlosen Endgerät (2) und einem mobilen Kommunikationsnetz (8) umfassen, zu erlangen; und
eine Zugangsnetzabfrageprotokoll (ANQP)-Nachricht, die diese Informationen umfasst, an den Wi-Fi-Zugangspunkt (4) zu übertragen.

6. Computerprogramm (91), umfassend Computerprogrammcode, der, wenn er auf einem drahtlosen Endgerät (2) läuft, das zum Kommunizieren sowohl mit einem mobilen Kommunikationsnetz als auch einem Wi-Fi-Zugangspunkt (4) konfiguriert ist, das drahtlose Endgerät (2) dazu veranlasst:
eine Anwesenheit eines Wi-Fi-Zugangspunkts (4) zu erkennen; Informationen, die zumindest einen Verbindungsparameter bezüglich einer aktuellen Verbindung zwischen dem drahtlosen Endgerät (2) und einem mobilen Kommunikationsnetz umfassen, zu erlangen; und
eine Zugangsnetzabfrageprotokoll (ANQP)-Nachricht, die diese Informationen umfasst, an den Wi-Fi-Zugangspunkt (4) zu übertragen.

7. Computerprogrammprodukt (90), umfassend ein Computerprogramm (91) nach Anspruch 6 und eine computerlesbare Einrichtung, auf der das Computerprogramm gespeichert ist.

8. Verfahren, durchgeführt in einem Wi-Fi-Netzknoten (4, 10) eines Wi-Fi-Netzes, wobei das Verfahren Folgendes umfasst:
Empfangen (40) einer Zugangsnetzabfrageprotokoll (ANQP)-Nachricht, die Informationen umfasst, die zumindest einen Verbindungsparameter von einem drahtlosen Endgerät (2) umfassen, wobei sich der zumindest eine Verbindungsparameter auf eine aktuelle Verbindung zwischen dem drahtlosen Endgerät (2) und einem mobilen Kommunikationsnetz (8) bezieht; und
Bestimmen (42), ob Datenverkehr, an und/oder von dem drahtlosen Endgerät (2), von dem mobilen Kommunikationsnetz an das Wi-Fi-Netz zu übermitteln ist, auf Grundlage der Informationen der ANQP-Nachricht.

9. Verfahren nach Anspruch 8, ferner umfassend:
Schätzen (41), ob das Wi-Fi-Netz in der Lage ist, bessere Qualität als das mobile Kommunikationsnetz bereitzustellen, auf Grundlage der Informationen in der ANQP-Nachricht, und wobei das Bestimmen (42) Bestimmen, ob Datenverkehr zu übermitteln ist, auf Grundlage des Ergebnisses des Schätzens umfasst.

10. Verfahren nach Anspruch 8 oder 9, wobei das Empfangen (40) durchgeführt wird, bevor das drahtlose Endgerät (2) dem Wi-Fi-Netz zugewiesen ist, und wobei das Bestimmen (42) Bestimmen, ob eine Verbindungsaufforderung von dem drahtlosen Endgerät (2) akzeptiert oder abgelehnt wird, auf Grundlage der Informationen in der ANQP-Nachricht umfasst.

11. Verfahren nach einem der Ansprüche 8 bis 10, wobei das Empfangen (40) einer ANQP-Nachricht für eine Vielzahl von drahtlosen Endgeräten wiederholt wird und wobei das Bestimmen (42) Durchführen eines Belastungsausgleichs umfasst, um zu entscheiden, welche drahtlosen Endgeräte dem Wi-Fi-Netzknoten (4, 10) zugewiesen bleiben sollen und welche drahtlosen Endgeräte dem Wi-Fi-Netzknoten (4, 10) nicht zugewiesen bleiben sollen.

12. Wi-Fi-Netzknoten (4, 10) eines Wi-Fi-Netzes, wobei der Wi-Fi-Netzknoten (4, 10) Folgendes umfasst:
einen Prozessor (60); und
ein Computerprogrammprodukt (64), das Anweisungen speichert, die, wenn sie von dem Prozessor (60) ausgeführt werden, den Wi-Fi-Netzknoten (4, 10) dazu veranlassen:
eine Zugangsnetzabfrageprotokoll (ANQP)-Nachricht zu empfangen, die Informationen umfasst, die zumindest einen Verbindungsparameter von einem drahtlosen Endgerät (2) umfassen, wobei sich der zumindest eine Verbindungsparameter auf eine aktuelle Verbindung zwischen dem drahtlosen Endgerät (2) und einem mobilen Kommunikationsnetz bezieht; und
auf Grundlage der Informationen der ANQP-Nachricht zu bestimmen, ob Datenverkehr, an und/oder von dem drahtlosen Endgerät (2), von dem mobilen Kommunikationsnetz an das Wi-Fi-Netz zu übermitteln ist.

13. Computerprogramm (91), umfassend Computerprogrammcode, der, wenn er auf dem Wi-Fi-Netzknoten (4, 10) läuft, den Wi-Fi-Netzknoten (4, 10) dazu veranlasst:
eine Zugangsnetzabfrageprotokoll (ANQP)-Nachricht zu empfangen, die Informationen umfasst, die zumindest einen Verbindungsparameter von einem drahtlosen Endgerät (2) umfassen, wobei sich der zumindest eine Verbindungsparameter auf eine aktuelle Verbindung zwischen dem drahtlosen Endgerät (2) und einem mobilen Kommunikationsnetz bezieht; und
auf Grundlage der Informationen der ANQP-Nachricht zu bestimmen, ob Datenverkehr, an und/oder von dem drahtlosen Endgerät (2), von dem mobilen Kommunikationsnetz an das Wi-Fi-Netz zu übermitteln ist.

14. Computerprogrammprodukt, umfassend ein Computerprogramm nach Anspruch 13 und eine computerlesbare Einrichtung, auf der das Computerprogramm gespeichert ist.

## Revendications

1. Procédé, effectué dans un terminal sans fil (2) qui est configuré pour communiquer à la fois avec un réseau de communication mobile et un point d'accès Wi-Fi (4), le procédé comprenant :
la détection (30) d'une présence d'un point d'accès Wi-Fi (4) ;
l'obtention (32) d'informations comprenant au moins un paramètre de liaison lié à une liaison actuelle entre le terminal sans fil (2) et un réseau de communication mobile (8) ; et
la transmission (34) d'un message de Protocole d'Interrogation de Réseau d'Accès, ANQP, comprenant les informations au point d'accès Wi-Fi (4).

2. Procédé selon la revendication 1, dans lequel l'au moins un paramètre de liaison comprend au moins l'un parmi un paramètre d'intensité de la liaison actuelle, un paramètre de Puissance Reçue de Signal de Référence, un paramètre de qualité de la liaison actuelle, un paramètre de Qualité Reçue de Signal de Référence, un débit de données de liaison montante, un débit de données de liaison descendante, un paramètre de gigue, et un paramètre de temps d'établissement de service.

3. Procédé selon l'une quelconque des revendications précédentes, dans lequel dans la transmission (34) d'un message ANQP, le message ANQP est une demande d'association.

4. Procédé selon l'une quelconque des revendications précédentes, comprenant en outre, après la transmission (34) d'un message ANQP, la transmission (38) d'une demande d'association au point d'accès Wi-Fi (4).

5. Terminal sans fil (2) qui est configuré pour communiquer à la fois avec un réseau de communication mobile et un point d'accès Wi-Fi (4), le terminal sans fil (2) comprenant :
un processeur (50) ; et
un produit de programme d'ordinateur (54) stockant des instructions qui, lorsqu'elles sont exécutées par le processeur, amènent le terminal sans fil (2) à :
détecter une présence d'un point d'accès Wi-Fi (4) ;
obtenir des informations comprenant au moins un paramètre de liaison lié à une liaison actuelle entre le terminal sans fil (2) et un réseau de communication mobile (8) ; et
transmettre un message de Protocole d'Interrogation de Réseau d'Accès, ANQP, comprenant les informations au point d'accès Wi-Fi (4).

6. Programme d'ordinateur (91) comprenant un code de programme d'ordinateur qui, lorsqu'il est exécuté sur un terminal sans fil (2) qui est configuré pour communiquer à la fois avec un réseau de communication mobile et un point d'accès Wi-Fi (4), amène le terminal sans fil (2) à :
détecter une présence d'un point d'accès Wi-Fi (4) ;
obtenir des informations comprenant au moins un paramètre de liaison lié à une liaison actuelle entre le terminal sans fil (2) et un réseau de communication mobile ; et
transmettre un message de Protocole d'Interrogation de Réseau d'Accès, ANQP, comprenant les informations au point d'accès Wi-Fi (4).

7. Produit de programme d'ordinateur (90) comprenant un programme d'ordinateur (91) selon la revendication 6 et un moyen lisible par ordinateur sur lequel le programme d'ordinateur est stocké.

8. Procédé, effectué dans un noeud de réseau Wi-Fi (4, 10) d'un réseau Wi-Fi, le procédé comprenant :
la réception (40) d'un message de Protocole d'Interrogation de Réseau d'Accès, ANQP, comprenant des informations comprenant au moins un paramètre de liaison en provenance d'un terminal sans fil (2), l'au moins un paramètre de liaison étant lié à une liaison actuelle entre le terminal sans fil (2) et un réseau de communication mobile (8) ; et
la détermination (42) de si transférer un trafic de données, vers et/ou depuis le terminal sans fil (2), du réseau de communication mobile au réseau Wi-Fi sur la base des informations du message ANQP.

9. Procédé selon la revendication 8, comprenant en outre :
l'estimation (41) de si le réseau Wi-Fi est capable de fournir une meilleure qualité que le réseau de communication mobile sur la base des informations dans le message ANQP, et
dans lequel la détermination (42) comprend la détermination de si transférer un trafic de données sur la base du résultat de l'estimation.

10. Procédé selon la revendication 8 ou 9, dans lequel la réception (40) est effectuée avant que le terminal sans fil (2) ne soit associé au réseau Wi-Fi, et dans lequel la détermination (42) comprend la détermination de si accepter ou rejeter une demande d'association en provenance du terminal sans fil (2) sur la base des informations du message ANQP.

11. Procédé selon l'une quelconque des revendications 8 à 10, dans lequel la réception (40) d'un message ANQP est répétée pour une pluralité de terminaux sans fil et dans lequel la détermination (42) comprend l'exécution d'un équilibrage de charge pour décider quels terminaux sans fil devraient être maintenus associés au noeud de réseau Wi-Fi (4, 10) et quels terminaux sans fil ne devraient pas être maintenus associés au noeud de réseau Wi-Fi (4, 10).

12. Noeud de réseau Wi-Fi (4, 10) d'un réseau Wi-Fi, le noeud de réseau Wi-Fi (4, 10) comprenant :
un processeur (60) ; et
un produit de programme d'ordinateur (64) stockant des instructions qui, lorsqu'elles sont exécutées par le processeur (60), amènent le noeud de réseau Wi-Fi (4, 10) à :
recevoir un message de Protocole d'Interrogation de Réseau d'Accès, ANQP, comprenant des informations comprenant au moins un paramètre de liaison en provenance d'un terminal sans fil (2), l'au moins un paramètre de liaison étant lié à une liaison actuelle entre le terminal sans fil (2) et un réseau de communication mobile ; et
déterminer si transférer un trafic de données, vers et/ou depuis le terminal sans fil (2), du réseau de communication mobile au réseau Wi-Fi sur la base des informations du message ANQP.

13. Programme d'ordinateur (91) comprenant un code de programme d'ordinateur qui, lorsqu'il est exécuté sur un noeud de réseau Wi-Fi (4, 10), amène le noeud de réseau Wi-Fi (4, 10) à :
recevoir un message de Protocole d'Interrogation de Réseau d'Accès, ANQP, comprenant des informations comprenant au moins un paramètre de liaison en provenance d'un terminal sans fil (2), l'au moins un paramètre de liaison étant lié à une liaison actuelle entre le terminal sans fil (2) et un réseau de communication mobile ; et
déterminer si transférer un trafic de données, vers et/ou depuis le terminal sans fil (2), du réseau de communication mobile au réseau Wi-Fi sur la base des informations du message ANQP.

14. Produit de programme d'ordinateur comprenant un programme d'ordinateur selon la revendication 13 et un moyen lisible par ordinateur sur lequel le programme d'ordinateur est stocké.
